(19) Europäisches Patentamt
European Patent Office
Office européen des brevets

(11) **EP 2 333 883 A1**

(12) **EUROPÄISCHE PATENTANMELDUNG**

(43) Veröffentlichungstag:
**15.06.2011 Patentblatt 2011/24**

(51) Int Cl.:
*H01M 4/90* (2006.01)    *H01M 4/86* (2006.01)
*H01M 4/88* (2006.01)    *H01M 8/12* (2006.01)

(21) Anmeldenummer: **09400053.6**

(22) Anmeldetag: **18.11.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder:
• **Forschungszentrum Jülich Gmbh (FJZ) 52425 Jülich (DE)**
• **PLANSEE SE 6600 Reutte (AT)**

(72) Erfinder:
• **Mücke, Robert D-52428 Jülich (DE)**
• **Menzler, Norbert H. D-52428 Jülich (DE)**
• **Buchkremer, Hans Peter D-52525 Heinsberg (DE)**
• **Rüttinger, Matthias A-6600 Reutte (DE)**

(54) **Anode für eine Hochtemperatur-Brennstoffzelle sowie deren Herstellung**

(57)    Die erfindungsgemäße substratgestützte Anode für eine Hochtemperatur-Brennstoffzelle weist einen wenigstens 3-schichtigen Anodenschichtverbund (A1, A2, A3) auf einem metallischen Substrat auf. Die einzelnen Schichten des Anodenschichtverbundes weisen jeweils Yttriumoxid-stabilisiertes Zirkoniumdioxid (YSZ) und Nickel auf, wobei die mittlere Korngröße des Nickels mit zunehmendem Abstand vom Substrat von Schicht zu Schicht abnimmt. Die letzte, für den Kontakt mit dem Elektrolyten vorgesehene, Schicht des Anodenschichtverbundes weist einen quadratischer Mittelrauwert $R_q$, im Rahmen der Erfindung auch mittlere Oberflächenrauhigkeit bezeichnet, von kleiner als 4 $\mu$m auf. Die gesamte

mittlere Porengröße dieser Schicht liegt regelmäßig zwischen 0,3 und 1,5 $\mu$m.

Beim Verfahren zur Herstellung einer solchen substratgestützten Anode für eine Hochtemperatur-Brennstoffzelle, werden wenigstens für die erste und zweite Schicht des Anodenschichtverbundes Ausgangspulver mit einer bimodalen Korngrößenverteilung von Yttriumoxidstabilisiertem Zirkoniumdioxid (YSZ) und Nickel-haltigem Pulver eingesetzt.

Die mittlere Korngröße des eingesetzten Nickel-haltigen Pulvers wird von Schicht zu Schicht reduziert, so dass sie in der letzten Schicht des Anodenschichtverbunds vorteilhaft maximal 0,5 $\mu$m beträgt.

Figur 1

**EP 2 333 883 A1**

**Beschreibung**

Die Erfindung betrifft eine Anode für eine Hochtennperatur-Bretunstoff'zelle, insbesondere für eine oxidkeramische Brennstoffzelle, sowie deren Herstellung. Bei der Anode handelt es sich um eine solche, die in einer metallsubstratgestützten Hochtemperatur-Brennstoffzelle zum Einsatz kommt.

Stand der Technik

Die oxidkeramische Brennstoffzelle (engl. Solid Oxide Fuel Cell, SOFC) ist eine Hochtemperatur-Brennstoffzelle, die heutzutage bei einer Betriebstemperatur von 650 - 1000 °C betrieben wird. Der gasdichte Elektrolyt dieses Zelltyps umfasst einen festen keramischen Werkstoff aus Metalloxid, der in der Lage ist, Sauerstoffionen zu leiten, für Elektronen jedoch isolierend wirkt Die Kathode ist in der Regel ebenfalls aus einem keramischen Wertstoff gefertigt, der für Ionen und für Elektronen leitfähig ist. Die Anode wird aus Nickel mit Yttriumoxid stabilisiertem Zirkoniumdioxid im Gemisch, einem so genannten Cermet, gefertigt, der ebenfalls Ionen und Elektronen leitet.

In der Entwicklung der planaren oxidkeramischen Brennstoffzellen hat es verschiedene Konzepte gegeben, die nachfolgend kurz vorgestellt werden.

Die erste Generation der SOFC basierte auf einem elektrolytgestützten Zellenkonzept mit einem relativ dicken Elektrolyten (ca. 150 $\mu$m), meist bestehend aus Yttriumoxid-stabilisiertem Zirkoniumdioxid (YSZ). Auf diese tragende Komponente wurden beidseitig poröse Elektroden aufgebracht. Die Anode bestand in der Regel aus einem Cermet aus metallischem und oxidischem Material, häufig aus Ni und YSZ. Die Kathode umfasste Oxide mit einer Perowskitstruktur, wie beispielsweise Lanthan-Strontium-Manganit (LSM) oder auch Lanthan-Strontium-Cobalt-Ferrit (LSCF).

Um eine ausreichend hohe ionische Leitfähigkeit des Elektrolyten zu erzielen, werden diese Brennstoffzellen bei Temperaturen in einem engen Temperaturintervall zwischen 850 und 1000 °C betrieben. Diese hohen Betriebstemperaturen fuhren jedoch nachteilig zu hohen Anforderungen an die Betriebsführung und die beteiligten Materialien, wobei üblicherweise eingesetzte Stähle als Interkonnektoren und Wärmetauscher auf Grund der hohen Temperaturen nicht eingesetzt werden können. Ziel war und ist es, eine Betriebsfülhrung für eine Hochtemperatur-Brennstoffzelle bei moderaten Temperaturen zu ermöglichen, so dass kostengünstige Materialien eingesetzt werden können, ohne dass es zu Leistungseinbußen kommt.

In der zweiten Generation der SOFC wurde auf das so genannte anodengestützte Konzept gewechselt, mit dessen Hilfe Betriebstemperaturen auch unterhalb von 800 °C realisiert werden konnten. Anodengestützte Brennstoffzellen lassen nicht nur mehr Freiräume beim Stackdesign zu, sondern ermöglichen neben einer geringen Betriebstemperatur auch einen weiten Spielraum zwischen minimaler und maximaler Betriebstemperatur. Bei der anoden-gestützten Brennstoffzelle wird ein relativ dickes (min. ca. 200 $\mu$m, in der Regel 200 bis 1500 $\mu$m), mechanisch tragendes keramisches Anodensubstrat mit einer dünnen, elektrochemisch aktiven Anodenfunktionsschicht verbunden. Beide bestehen in der Regel aus einem porösen Nickel/YSZ-Cermet (YSZ: Yttriumoxid-stabilisiertes Zirkoniumdioxid), auf welchem dann der nunmehr dünnere, gasdichte Elektrolyt aufgebracht wird. Dabei unterscheidet sich das Substrat von der Anodenfunktionsschicht häufig nicht in der Zusammensetzung (typischerweise Nickel mit Yttriumoxid-stabilisiertem Zirkoniumdioxid), sondern regelmäßig nur in der verwendeten Korngröße. Auf der Anodenfunktionsschicht wird eine etwa 10 $\mu$m dicke gasdichte YSZ-Elektrolytschicht angeordnet. Sofern anstelle von LSM eine LSCF-Kathode verwendet wird, wird häufig zwischen Elektrolyt und LSCF-Kathode eine Diffusionsbarriere aus GCO (Gadolinium-Ceroxid, bzw. gleichbedeutend Gadoliniumoxid-dotiertes Cerdioxid) aufgebracht, da LSCF und YSZ chemisch inkompatibel sind. Diese Diffusionsbarriere verhindert Reaktionen zwischen LSCF und YSZ, insbesondere die Bildung elektrisch isolierender Zwischenphasen.

Für eine weitere Verbesserung des Betriebsverhaltens hinsichtlich der thermischen Zyklierbarkeit und der mechanischen Stabilität sowie zur weiteren Absenkung der Betriebtemperaturen auf 600 bis 750°C sind als so genannte dritte Generation elektrolytische Dünnschichtsysteme vorgesehen, welche auf einem metallischen Trägersubstrat basieren. Alternativen sehen auch dickere Elektrolytschichten aus Materialien mit hoher ionischer Leitfähigkeit vor (z. B. Gadoliniumoxid-dotiertes Cerdioxid, CGO, oder mit Scandiumoxid vollstabilisiertes Zirkoniumdioxid, beispielsweise 10Sc1CeSZ). Einige metallische Legierungen, insbesondere bestimmte ferritische Stähle, weisen neben einer an die Zellschichten gut angepassten Wärmedehnung auch das für den Betrieb in einer solchen Brennstoffzelle benötigte gute Langzeitverhalten (z. B. hohe Korrosions- und Kriechbeständigkeit) sowohl in der Ausführung als dichter Interkonnektor, als auch als poröses Trägersubstrat auf. Gleichzeitig wurde die klassische YSZ/LSM-Komposit-Kathode ersetzt durch eine zweischichtige Kathode, umfassend eine Kathodcnschicht aus LSCF sowie eine Zwischenschicht aus CGO zum Elektrolyten hin.

Metallgestützte oxidkeramische Brennstoffzellen weisen aufgrund der mechanischen Eigenschaften metallischer Werkstoffe und günstiger Rohstoffpreise ein großes Potential in der Anrvendungstechnik auf. Für die angestrebte Anwendung sollte eine substratgestützte Brennstoffzelle insgesamt folgende Eigenschaften und Einschränkungen erfüllen:

(1) hohe elektronische Leitfähigkeit des Substrates,

(2) hohe Korrosionsstabilität des Substrats, sowohl in oxidierender als auch in reduzierender Atmosphäre,

(3) an die keramischen Schichten angepasster thermischer Ausdehnungskoeffizient des metallischen Substrats, vorzugsweise zwischen 10 und $12 \cdot 10^{-6}$ K$^{-1}$,

(4) ausreichende Gasdurchlässigkeit für das verwendete Brenngas, bedeutet eine Porosität von mindestens 30 bis 50 Vol.-% für das Substrat,

(5) Absenkung der Oberflächenrauhigkeit des Substrats, um ebene und geschlossene Beschichtungen zu ermöglichen.

Darüber hinaus sollte die Anode eine ausreichende katalytische Aktivität in der Anodenfunktionsschicht aufweisen, sowie eine ausreichende mechanische Stabilität und Integrität, insbesondere eine gutc Haftung an der Substratoberfläche. Die maximale Sintertemperatur für die aufgebrachten Anodenschichten sollte deutlich unterhalb 1400 °C in reduzierender Atmosphäre, insbesondere um 1200 °C, liegen.

Für die Herstellung einer metallgestützten SOFC, müssen allerdings, insbesondere wegen der geringeren Hochtemperaturbeständigkeit des metallischen Trägers im Vergleich zu keramischen Trägern, andere Wege gewählt werden, um die funktionalen Schichten der Brennstoffzelle zu applizieren. Eine Herausforderung ist dabei regelmäßig die große Oberflächenrauhigkeit metallischer, poröser Substrate, welche für eine funktionale Anodenschicht und eine dünne Elektrolytschicht deutlich abgesenkt werden muss. Durch eine Gradierung, bei der mehrere pulvertechnologische Schichten mit abnehmender Korngröße zum Einsatz kommen, kann prinzipiell das Problem der Oberflächenrauhigkeit verringert werden. Insbesondere erweist sich für Verfahren, mit denen dichte Elektrolyten mit geringer Dicke (kleiner 5 $\mu$m) bei niedrigen Temperaturen hergestellt werden können, z. B. Gasphasenabscheidung oder Sol-Gel-Technik, die Oberflächenrauhigkeit als besonders kritischer Parameter.

Um metallische Substrate geringer Temperaturbeständigkeit mit einem dichten keramischen Elektrolyten zu beschichten, wurde in der Vergangenheit das thermische Spritzen und verschiedene Sinterrouten eingesetzt. Beim thermischen Spritzen entsteht aufgrund des schnellen Auftreffens der aufgeschmolzenen, keramischen Partikel und des sprunghaften Abkühlens an der Substratoberfläche (Rascherstarrung) in der Regel eine poröse, laminare Struktur, welche erst durch das Aufbringen mehrerer weiterer Lagen eine ausreichende Gasdichtigkeit aufweist. Dadurch erhöht sich im Vergleich zu herkömmlichen, nicht-metallischen anodengestützten Brennstoffzellen die Elektrolytschichtdicke nachteilig von ca. 5 bis 10 $\mu$m auf ca. 40 $\mu$m. Der Anstieg der Schichtdicke des Elektrolyten geht mit einer signifikanten Erhöhung des ohmsche Widerstandes einher. Dieser Widerstand wird durch die Poren an den Grenzen der abgeschiedenen Erstarrungskörper *(splats)* nochmals vergrößert, so dass bisher keine vergleichbaren Leistungsdichten zu herkömmlichen nicht-metall gestützten Brennstoffzellen erzielt werden konnten.

Die Herstellung über eine Sinterroute, bei der, wie bei den herkömmlichen keramischen Substraten, mit Pulvern in Suspensionen oder Pasten gearbeitet wird und diese nach Beschichtung einer thermischen Auslagerung zur Sinterung unterzogen werden, ist bei der metallgestützten SOFC vor allem durch die vom Substrat vorgegebene Maximaltemperatur eingeschränkt- Die für herkömmliche Brennstoffzellen mit keramischen Substraten eingesetzten Elektrolytmaterialien bzw. -pulver benötigen zumeist 1350 °C und mehr, um zu einer Schicht mit der erforderlichen Gasdichtigkeit zu verdichten. Bei den abgesenkten Sintertemperaturen für metallische Substrate ist dies jedoch nicht mehr realisierbar. Um beispielsweise intermetallische Phasen in einer Ni-haltigen Anode zu vermeiden, welche den späteren Zellbetrieb beeinträchtigen, sind für FeCr-Legierungen, welche als Substrat eingesetzt werden, Temperaturen von nicht mehr als 1200 °C anzustreben.

Aus [1] ist beispielsweise eine Brennstoffzelle von Ceres Power Ltd. bekannt, bei der ein Träger aus einer etwa 200 bis 300 $\mu$m dicken, perforierten Folie aus ferritischem Stahl eingesetzt wird- Über konventionelle Methoden, wie Nassspritzen oder Siebdruck, wird im Anschluss die Anode als Dickschicht aus einem Ni-Cermet mit Gadoliniumoxiddotiertem Cerdioxid (CGO) mit einer Schichtdicke zwischen. 10 und 20 $\mu$m aufgebracht, während der Elektrolyt, ebenfalls aus CGO, über einen elektrophoretischen Prozess mit einer Schichtdicke zwischen 10 und 30 $\mu$m darauf appliziert wird. Die Sinterung kann insbesondere auf Grund der hohen Packungsdichte durch den elektrophoretischen Prozess bei Temperaturen unterhalb von 1000 °C erfolgen.

In [2] wird ferner die Herstellung einer metallgestützten SOFC offenbart, bei der neben einer Vliesstruktur aus einer FeCrAlY-Legierung, metallische Gestricke aus CroFer22APU und sintermetallurgisch hergestellte poröse Platten als metallische Substrate mit einer Porosität von mehr als 80 Vol.-% getestet wurden. Die ca. 50 $\mu$m dicke Ni/ZrO$_2$-Cermet-Anode mit einer Porosität von mehr als 20 Vol-% wurde plasmagespritzt, während für die Herstellung der dichten, ca. 40 $\mu$m dicken Elektrolytschicht aus YSZ das DC-Vakuumplasmaspritzverfahren unter Verwendung von Hochgeschwindigkeitsdüsen angewandt wurde.

Eine weitere Methode, eine metallgestützte SOFC zu fertigen, besteht im Laminieren einer dünnen, anodengestützten Zelle auf ein dickeres Metallsubstrat im bereits gesinterten Zustand [3]. Der Nachteil dieser Methode ist der hohe Herstellungsaufwand und die problematische Haftung der beiden Komponenten gerade bei größeren Zellgeometrien. Die Herstellung der dünnen, auflaminierten anodengestützten Zellen erfordert bereits den gleichen technischen Aufwand wie herkömmliche, auch ohne Metallsubstrat, bereits einsatzfahige anodengestützte Zellen. Die Sinterung erfolgt hierbei bei hoher Temperatur (ca. 1400 °C) in oxidierender Atmosphäre, welche eine andere Ofentechnologie benötigt, als die Sinterung der metallischen Komponente in reduzierender Atmosphäre.

Als eine weitere Option zum Aufbringen einer Elektrolytbeschichtung auf ein Metallsubstrat/Anoden-Einheit ist auch der PVD-Prozess zu nennen (PVD = Physical Vapour Deposition, z. B. Sputtern oder Elektronenstrahlverdampfen), insbesondere wenn dünne Elektrolytschichten angestrebt werden.

## Aufgabe und Lösung

Aufgabe der Erfindung ist es, eine metallgestützte, effektive oxidkeramische Brennstoffzelle (SOFC) mit einer möglichst dünnen, gasdichten Elektolytschicht bereit zu stellen, die bei Betziebstemperaturen unterhalb von 850 °C, insbesondere zwischen 650 und 750 °C, mit guter Leistung betrieben werden kann, und auf einfachere Weise, als bislang nach dem Stand der Technik möglich, hergestellt werden kann.

Die Aufgabe der Erfindung wird gelöst durch einen Anodenschichtverbund für eine metallgestützte SOFC mit der Gesamtheit der Merkmale des Hauptanspruchs sowie durch ein Herstellungsverfahren gemäß Nebenanspruch. Vorteilhafte Ausrührungsfbnnen des Anodenschichtverbunds für eine metallgestützte SOFC oder des Herstellungsverfahrens finden sich in den jeweils darauf rückbezogenen Ansprüchen.

## Beschreibung der Erfindung

Die Aufgabe der Erfindung wird gelöst durch einen Anodenschichtverbund für eine metallgestützte SOFC, auf den vorteilhaft ein gasdichter Dünnschichtelektrolyt mit einer Dicke von weniger als 10 $\mu$m über physikalische Gasphasenabscheidung (PVD, z. B. Sputtern oder Elektronenstrahlverdampfen) oder Sol-Gel-Technologie aufgebracht werden kann. Dazu weist die Oberfläche des Anodenschichtverbundes erfindungsgemäß eine glatte Oberfläche mit einer mittleren Oberflächenrauhigkeit $R_q$ kleiner als 4 $\mu$m, vorzugsweise kleiner als 3 $\mu$m, und insbesondere vorzugsweise kleiner als 2 $\mu$m und mit einer quadratischen Mikromittenrauheit $R^{\mu}_q$ von kleiner als 1 $\mu$m, vorzugsweise kleiner 0,6 $\mu$m auf. Vorzugsweise weist die Oberfläche des Anodenschichtverbundes, bzw. die letzte Schicht des Anodenschichtverbundes, eine mittlere Porengröße kleiner 1,5 $\mu$m, vorzugsweise kleiner 0,8 $\mu$m auf. Dies wird durch eine grobe Nickelphase sowie eine feinere keramische Phase erreicht (bimodale Korngrößenverteilung). Die Nickelphase weist an der Oberfläche, bzw. in der letzten Schicht des Anodenschichtverbundes, eine mittlere Porengröße von kleiner 4 $\mu$m, vorzugsweise kleiner 3 $\mu$m auf.

Zur physikalischen Charakterisierung einer Oberfläche kann die Rauhigkeit herangezogen werden. Das Primärprofil wurde optisch vermessen (konfokaler Lasertopograph) und das gefilterte Rauheitsprofil und die Rauwerte gemäß DIN EN ISO 11562 und 4287 berechnet. Die Längen der Taststrecke $(l_t)$, Meßstrecken $(l_n)$ und- Einzelmessstrecken $(l_r)$ wurden gemäß DIN EN ISO 4288 gewählt. Nach DIN EN ISO 4287 gibt der arithmetische Mittenrauwert $R_a$ den arithmetischen Mittelwert der Beträge aller Profilwerte eines Rauheitsprofils an. Der quadratische Mittenrauwert $R_q$ ist der quadratische Mittelwert aller Profilwerte und wichtet Ausreißer stärker als der arithmetische Mittenrauwert $R_a$. Der quadratische Mittenrauwert $R_q$ wird im Rahmen der Erfindung auch als mittlere Oberflächenrauhigkeit bezeichnet. Die gemittelte Rautiefe $R_z$ ist gemäß DIN EN ISO 4287 als das arithmetische Mittel der Einzelrautiefen aller Einzelmessstrecken definiert. Eine Einzelrautiefe bedeutet dabei den Abstand zwischen der höchsten Spitze und der tiefsten Riefe in einer Einzelmessstrecke. Die gesamte Messtrecke wird dabei in 5 gleichgroße, aufeinanderfolgende Segmente (Einzelmessstrecken) unterteilt. Da der $R_z$- Wert von den tiefsten Tälern und höchsten Spitzen bestimmt wird, ist dieser besonders von dem verwendeten Messverfahren abhängig. Im Gegensatz zu dem hier verwendeten optischen Verfahren muss beispielsweise bei mechanischen Tastschnittverfahren in Betracht gezogen werden, dass in Abhängigkeit von der verwendeten Spitzengeometrie nicht alle spitzen Täler erfasst werden können.

In DIN EN ISO 4288 ist die Aufteilung des Primärprofils in einen für die Rauwertsberechnung vernachlässigten Welligkeitsanteil (große Wellenlängen) und in den eigentlichen Rauhigkeitsanteil (kleine Wellenlängen) mittels einer in Abhängigkeit von den erzielten Rauwerten Filtergrenzwellenlänge festgelegt. So ist beispielsweise für einen arithmetische Mittenrauweit $R_a$ größer 0,02 $\mu$m und kleiner oder gleich 2,00 $\mu$m eine Grenzwellenlänge $\lambda_c$ von 0,8 mm vorgesehen (mit $l_r = \lambda_c$). Insbesondere für aus der Gasphase abgeschiedene Schichten (PVD) spielen allerdings Unebenheiten dieser Wellenlänge noch keine entscheidende Rolle für die Qualität und Dichtigkeit der Schicht, sondern Unebenheiten mit einer deutlich kleineren Wellenlänge. Deshalb wird in dieser Erfindung neben der Rauhigkeit nach DIN eine sogenannte Mikrorauhigkeit verwendet, der bei sonst gleichen Gesamtmessstrecken eine Grenzwellenlänge von 0,15 mm zugrunde liegt_ Dabei erhöht sich die Zahl der Einzelmessstrecken (normalerweise 5) entsprechend, da stets $l_r = \lambda_c$ zu gelten hat. Diese Mikrorauhigkeiten wurden entsprechend mit $R^{\mu}_a$ , $R^{\mu}_q$ und $R^{\mu}_z$ gekennzeichnet.

Als weitere charakteristische Parameter zur Beschreibung der Eigenschaften einer gesinterten Schicht kann die mittlere Porengröße und die Sinterkorngröße herangezogen werden. Beide Maßzahlen lassen sich für beliebige, auch offenporöse, Gefüge über das Linienschnittvetfahren an rasterelektronenmikroskopischen Aufnahmen von Querschliffen bestimmen. Dazu werden zunächst in den Aufnahmen die einzelnen Phasen (Ni-Partikel, 8YSZ-Partikel, Poren) über Kontrastunterschiede, Kornform oder Elementanalyse (z. B. energiedispersive Röntgenspektroskopie, EDX) entsprechend markiert, dann statistisch Geraden eingezeichnet und die Schnittpunktc an den Übergängen zwischen den verschiedenen Phasen markiert. Der Durchschnittswert aller Längen der so entstandenen Streckenabschnitte, welche in einer einzelnen Phase liegen, gibt die mittlere Schnittlinienlänge für diese Phase wieder (z. B- Poren). Diese mittlere Schnittlinienlänge wird durch Multiplikation mit einem entsprechenden Geometriefaktor in die tatsächliche Korngröße oder Porengröße umgerechnet. Als Geometriefaktor wurde unter Annahme der üblicherweise genutzten Modellvorstellung von Poren um tetrakaidekaedrische Körner nach Referenz [4] der Wert 1,68 benutzt und für die Korngröße der Wert 1,56 [5].

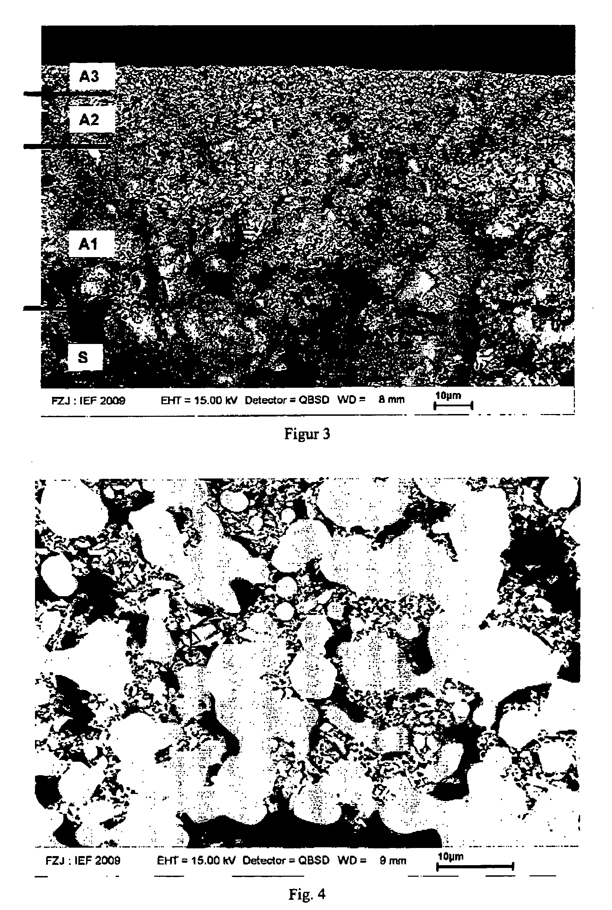

Soweit in dieser Erfindung von mittleren Porengrößen innerhalb der Ni-Phase gesprochen wird, ist damit ein Maß für die Zwischenräume gemeint, die von den Ni-Partikeln gebildet werden. Diese sind teilweise mit 8YSZ-Partikeln aufgefüllt (Fig. 4), welche in der Porengröße der Ni-Phase nicht berücksichtigt werden.

Wird weiterhin in dieser Erfindung von Sinterkomgrößen gesprochen, ist dabei die morphologisch ablesbare Korngröße aus dem Gefüge gemeint- Die Proben wurden vor der Analyse nicht gcätzt und die inneren Korngrenzen innerhalb der betrachteten Phase blieben unberücksichtigt, sondern nur der Material-Poren-Übergang bzw. der Übergang zu einer anderen Material-Phase.

Die maximale Porengröße wurde aus einer Reihe von rasterelektronenmikroskopischen Aufnahmen aus den größten Innendurchmessern aller Poren bestimmt. Der Innendurchmesser einer Pore bezeichnet dabei die Länge der größten geraden Strecke, die innerhalb der Pore verläuft.

Es ist dem Fachmann in Abhängigkeit der zu ermittelnden Poren- und Korngröße überlassen, bei den mikroskopischen Aufnahmen auf eine entsprechende Vergrößerung zu achten. Insbesondere muss die zu ermittelnde Poren- oder Korngröße noch aufgelöst werden und gleichzeitig noch vom Bildausschnitt vollständig erfasst werden.

Unter einem Anodenschichtverbund wird ein wenigstens 3-schichtiges Schichtsystem verstanden, welches in der hergestellten SOFC die Funktion der Anode übernimmt, das bedeutet, dass diese elektrisch leitfähig und porös ist sowie eine katalytische Komponente (Nickel) für die Reformierung und die elektrochemische Oxidation des Brenngases beinhaltet. An der Grenzfläche zwischen Elektrolyt und Anode befindet sich eine 1-15 $\mu$m dicke, so genannte Anodenfunktionsschicht, deren Zusammensetzung der der Anode entspricht, die aber für einen hohen elektrochemischen Umsatz in der Regel feiner strukturiert ist. Diese Anodenfunktionsschicht zählt im Rahmen der Erfindung mit zum Anodenschichtverbund. Der erfindungsgemäße Anodenschichtverbund weist daher wenigstens zwei Anodenschichten und wenigstens eine Anodenfunktionsschicht auf, wobei eine (erste, bzw. unterste) Anodenschicht für den Kontakt mit dem metallischen Substrat vorgesehen ist, und eine (letzte, bzw. oberste) Anodenfunktionsschieht für den Kontakt mit einem Elektrolyten vorgesehen ist.

Ein Anodenschichtverbund mit diesen Eigenschaften kann vorteilhaft durch einen gradierten Schichtverbund, ausgehend von einem mechanisch tragenden Substrat, über eine wenigstens zweischichtige Anode sowie einer Anodeniunktionsschicht, ermöglicht werden. Dabei ist die Auswahl und das Verhältnis an geeigneten Ausgangspulvern, deren Korngrößenverteilung sowie die gewählten Schichtdicken der einzelnen hergestellten Schichten entscheidend.

Erfindungsgemäß dient ein poröses metallisches Substrat als mechanisch tragendes Teil für die SOFC. Die Porosität des Substrates sollte vorteilhaft zwischen 20 und 70 Vol.-%, insbesondere zwischen 30 und 60 Vol.-% liegen. In der Regel werden Substrate mit einer Schichtdicke zwischen 200 und 1500 $\mu$m eingesetzt. Vorzugsweise weist das Substrat eine mittlere Porengröße von 5 bis 60 $\mu$m, vorteilhaft von 20 bis 50 $\mu$m, und besonders vorteilhaft von 25 bis 45 $\mu$m auf. Diese korreliert mit Sinterkotngrößen von 30 bis 80 $\mu$m, wodurch das Material im Gegensatz zu feineren Gefügen eine vorteilhafte Korrosionsstabilität aufweist.

Als Material für das metallische Substrat ist sowohl eine ferritische FeCrMx Legierung als auch eine Legierung auf Chrombasis geeignet. Die FeCrMx Legierung weist neben Eisen regelmäßig Chromgehalte zwischen 16 und 30 Gew.% und zusätzlich noch wenigstens ein Legierungselement in einem Anteil von 0,01 bis 2 Gew.-% auf, welches aus der Gruppe der Seltenerdenmetalle bzw. deren Oxide, z. B. Y, $Y_2O_3$, Sc, $Sc_2O_3$, oder aus der Gruppe Ti, Al, Mn, Mo oder Co stammt.

Als Beispiele für geeignete ferritische Stähle seien hier Ferrochrom (1.4742), CrA120-5 (1.4767) und Crofer 22 APU von Thyssen Krupp, FeCrAlY von Technetics, ZMG 232 von Hitachi Metals, SUS 430 HA und SUS 430 Na von Nippon Steel sowie sämtliche pulvermetallurgischen ODS Eisenbasislegierungen von Plansee wie z. B. ITM Fe-26Cr-(Mo, Ti, $Y_2O_3$) genannt.

Alternativ kann als poröses metallisches Substrat auch eine Legierung auf Chrombasis, das bedeutet mit einem Chromgehalt von mehr als 65 Gew.%, beispielsweise Cr5FelY bzw. $Cr5FelY_2O_3$, eingesetzt werden.

Die Aufbringung eines gasdichten Dünnschichtelektrolyten stellt gewisse Anforderungen an die darunter liegende Anodeniunktionsschieht bezüglich der Oberflächenrauhigkeit und -porengröße. Die gewünschten Eigenschaften in Form einer quadratischen Mittenrauheit $R_q$ von kleiner als 4 $\mu$m, vorzugsweise kleiner 3 $\mu$m, insbesondere kleiner 2 $\mu$m, und einer quadratischen Mikromittenrauheit $R_q^\mu$ von kleiner als 1 $\mu$m, vorzugsweise kleiner 0,6 $\mu$m, beziehungsweise einer vorteilhaften mittleren Porengröße von kleiner als 1,5 $\mu$m, vorzugsweise kleiner 0,8 $\mu$m, können erfindungsgemäß durch einen wenigstens 3-schichtigen gradierten Anodenschichtaufbau erreicht werden. Gleichzeitig sollte dieser Anodenschichtaufbau zudem die notwendigen Anforderungen bezüglich Festigkeit, Leitfähigkeit, Haftbarkeit bei maximal 1200 °C Sintertemperatur und katalytischer Funktion erfüllen. Dazu wird mithilfe entsprechender Ausgangskorngrößen eine bimodale Sinterkorngröße eingestellt, bei welcher die mittlere Sinterkorngröße der Nickelphase mindestens doppelt so groß ist, wie die Sinterkorngröße der keramischen Phase. Die Nickelphase weist in der letzten Anodenschicht eine mittlere Porengröße von weniger als 4 $\mu$m, vorzugsweise von weniger als 3 $\mu$m auf. Diese Poren sind teilweise von Partikeln der keramischen Phase aufgefüllt, welche die mittlere Porengröße insgesamt auf die vorgenannten Werte herabsenkt.

Zur Unterbindung von metallischer Interdiffusion zwischen dem Metallsubstrat und der metallischen Ni-Phase des Anoden-Cermets während der Sinterung und des späteren Zellbetriebcs ist das metallische Substrat mit einer sehr dünnen keramischen Diffusionsbarriere, vorzugsweise aus unterschiedlich dotiertem Lanthan-Strontium-Manganit (LSM) oder Lanthan-Strontium-Chromit (LSCR) mit unterschiedlichen Lanthan und Sttontiumgehalten, beschichtet. Die Schichtdicke der Diffusionsbarriere kann dabei bis zu 50 $\mu$m betragen, vorzugsweise liegt sie aber vorteilhaft zwischen 0,5 und 5 $\mu$m. In diesem Fall ändert die aufgebrachte Diffusionsbarriere die Oberflächeneigenschaften des metallischen Substrats bezüglich der Porengröße und Rauhigkeit aufgrund der sehr geringen Schichtdicke nur unwesentlich.

Erfindungsgemäß wird ausgehend von einem beispielsweise mit einer Diffusionsbarriere versehenen, metallischen Substrat, über eine nasschemische Route, vorzugsweise über Siebdruck, eine erste Anodenschicht aus einer mit dem Substrat chemisch verträglichen Keramik aufgebracht, um die Oberflächenrauhigkeit und die Obcrflächenporengröße zu reduzieren. Eine solche Keramik kann beispielsweise eine Mischung aus Nickelteilchen und Yttriumoxidstabilisiertem Zirkoniumdioxid (YSZ) oder auch eine Mischung aus Nickelteilchen und dotiertem Ceroxid (CGO) umfassen. Als YSZ kommt dabei sowohl voll- als auch teilstabilisiertes Zirkoniumdioxid (3YSZ, 8YSZ, 10YSZ) in Frage. Die Oberfläche eines mit der Diffusionsbarriere versehenen, metallischen Substrats weist in der Regel einen quadratischen Mittelrauwcrt $R_q$ zwischen 7 $\mu$m und 15 $\mu$m und einen quadratischen Mikromittenrauheit $R_q^\mu$ von 5 bis 12 $\mu$m auf. Die optisch ermittelte mittlere Porengröße liegt zwischen 20 $\mu$m und 50 $\mu$m.

Um die Infiltration dieser ersten Anodenschicht in den metallischen Träger zu verhindern und gleichzeitig eine hinreichende Versinterung der keramischen Komponente bei maximal 1200 °C zu erreichen, wird erfindungsgemäß eine Pulvermischung mit einer bimodalen Korngrößenverteilung von Ni-haltigem Pulver zu YSZ Pulver eingesetzt, wobei der Anteil an Ni-haltigem Pulver mehr als 50 Gew.%, vorteilhaft sogar 60 bis 80 Gew.-% beträgt. Vorteilhaft wird als Ni-haltiges Pulver reines Ni-Pulver eingesetzt. Das eingesetzte YSZ-Pulver weist dabei vorzugsweise eine mittlere Korngröße zwischen 0,5 $\mu$m und 1,5 $\mu$m, weiter bevorzugt um 0,6 $\mu$m auf. Die mittlere Korngröße des verwendeten Ni-Pulvers beträgt vorzugsweise zwischen 3 $\mu$m und 20 $\mu$m, weiter bevorzugt um 5 $\mu$m. Für die erste Schicht wird vorteilhaft eine Schichtdicke zwischen 10 und 80 $\mu$m gewählt.

Die zweite Anodenschicht aus Ni und YSZ wird ebenfalls über eine nasschemische Route auf die erste Anodenschicht aufgebracht und muss die identischen Anforderungen der ersten Schicht wiederholen, nur dass dabei die Rauhigkeit und die Porengröße weiter reduziert werden.

Dies wird dadurch erreicht, dass die für die zweite Anodenschicht eingesetzte Pulvermischung eine gegenüber der ersten Anodenschicht reduzierte bimodale Korngrößenverteilung aufweist, derart dass keine oder nur eine geringe Infiltration in die erste Anodenschicht, aber keine Infiltration in das metallische Substrat erfolgt. Auch für diese Schicht wird ein Anteil an Ni-haltigem Pulver von mehr als 50 Gew.%, vorteilhaft sogar 60 bis 80 Gew.% gewählt. Vorteilhaft wird als Ni-haltiges Pulver reines Ni-Pulver cingesctzt. Während das eingesetzte YSZ-Pulver ebenfalls eine mittlere Korngröße zwischen 0,5 $\mu$m und 1,5 $\mu$m, vorzugsweise um 0,6 $\mu$m aufweist, beträgt die mittlere Korngröße des verwendeten Ni-Pulvers für die zweite Schicht nur noch 0,7 $\mu$m bis 4 $\mu$m, vorzugsweise $\mu$m 1,2 $\mu$m. aber auf jeden Fall kleiner als bei der ersten Anodenschicht. Die gewählten Körngrößen der Pulver sowie die aufgebrachte Schichtdicke dieser zweiten Schicht, die vorteilhaft zwischen 10 und 50 $\mu$m liegt, fühzen dann zu einer gegenüber der ersten Schicht deutlich verringerten Rauhigkeit und einer verringerten Porengröße.

Auf diese zweite oder gegebenenfalls weitere Anodenschichten, bei denen jeweils die mittlere Korngröße des eingesetzten Ni-Pulvers reduziert wird, wird als letzte (oberste) Schicht des Anodenschichtverbundes ebenfalls nasschemisch (Siebdruck, Tauchbeschichtung, Schlickerguss) eine aktive Anodenfunkdonsschicht aus NiO und YSZ aufgebracht, die im Vergleich zu bisherigen bekannten Anodenfunktionsschichten aus anodengestützten SOFCs einen deutlich höheren NiO-Anteil von mindestens 80 Gew.% aufweist, wodurch nach der Sinterung bei maximal 1200 °C in reduzierender Atmosphäre eine ausreichende Schichtleitfälügkeit gegeben ist.

Zur weiteren Reduzierung von Rauhigkeit und Porengröße werden ein NiO-Pulver und ein YSZ-Pulver mit einer nochmals verringerten mittleren Korngrößenverteilung gegenüber der zweiten Schicht, bzw. weiteren Zwischenschichten, eingesetzt. Auf Grund des benötigten kleinen Partikeldurchmessers wird bei dieser Anodenfunictionsschicht in der Regel NiO anstelle von reinem Ni-Pulver eingesetzt, da reines Nickelpulver auf Grund der großen Oberfläche regelmäßig sehr schnell mit Luftsauerstoff zu Nickeloxid reagiert- Für die letzte Schicht (Anodenfunktionsschicht) sollte ein YSZ-Pulver mit einer mittleren Korngröße von 0,1 bis 0,3 $\mu$m und ein NiO-Pulver mit einer mittleren Korngröße von 0,1 bis 0,5 $\mu$m eingesetzt werden. Die Schichtdicke sollte vorteilhaft zwischen 1 und 15 $\mu$m betragen. Erfindungsgemäß wird so insgesamt ein wenigstens 3-schichtiges Schichtsystem mit der Funktion einer Anode hergestellt, bei dem der quadratische Mittenrauwert $R_q$ der letzten, für den Kontakt mit einem Elektrolyten vorgesehenen Schicht (Anodenfunktionsschicht), Werte kleiner als 4 $\mu$m, vorzugsweise kleiner als 2 $\mu$m, und der quadratische Mikromittenrauheit $R_q^\mu$

Werte kleiner als 1 $\mu$m, vorzugsweise kleiner als 0,6 $\mu$m, aufweist und diese Schicht eine mittlere Porengröße von maximal 1,5 $\mu$m, vorzugsweise zwischen 0,2 und 0,8 $\mu$m zeigt. Dazu ist es notfalls erforderlich, neben den vorab erwähnten drei Schichten weitere Anodenschichten, bzw. gegebenenfalls auch weitere Anodenfunktionsschichten aufzubringen.

Dem Fachmann kann es überlassen werden auszuwählen, wie viele Schichten mit jeweils verringerten mittleren Korngrößen er benötigt, um von den Eigenschaften (Rauhigkeit und mittlere Porengröße) des Ausgangssubstrates, bzw. der darauf angeordneten Diffusionsbarriere, zu den gewünschten Eigenschaften der obersten Anodenfimküonsschicht zu gelangen, um so das erfolgreiche Aufbringen des gasdichten Dünnschichtelektrolyten mit einer Dicke von weniger als 10 $\mu$m sicherzustellen. Beispiele für entsprechende Parameter finden sich dazu im Ausfiffiningsteil.

Die auf diese Weise hergestellte und mit den vorgenannten Eigenschaften versehene Anode (Anodenschichtverbund) wird nun vorzugsweise gesintert. Die Sintertemperatur liegt insbesondere unterhalb von 1300 °C. Der Anodenschichtverbund kann anschließend mit einem Dünnschichtelektrolyten beschichtet werden. Diese Beschichtung erfolgt vorzugsweise nach der Sinterung des Anodenschichtverbundes. Zwischen dem Anodenschichtverbund und dem Dünnschichtelektrolyten kann eine zusätzliche Adaptionsschicht angeordnet sein, um den Dünnschichtelektrolyten an die letzte Schicht des Anodenschichtverbundes zu adaptieren-Hierdurch wird ein homogenes Wachstum der Elektrolytschicht unterstützt. Zu diesem Zweck ist die Adaptionsschicht hinsichtlich ihrer Materialeigenschaften besser an den Elektrolyt angepasst als die letzte Schicht des Anodenschichtverbundes, indem die Adaptionsschicht z. B- eine kleinere mittlere Porengröße als die letzte Schicht des Anodenschichtverbundes auf weist.

Zur Aufbringung des Dünnschichtelektrolyten sind beispielsweise Gasphasenabscheidung, insbesondere PVD (Physical Vapour Deposition) oder Sol-Gel-Technologien als Verfahren geeignet. Die Schichtdicke des Elektrolyten sollte dabei 10 $\mu$m nicht überschreiten, um den ohmschen Widerstand möglichst gering zu halten. Vorteilhafte Ausgestaltungen umfassen einen gasdichten Elektrolyten mit einer Schichtdicke kleiner 10 $\mu$m.

Auf dem Elektrolyten kann weiterhin, optional unter Zwischenlage einer Diffusionsbarriereschicht, eine Hochleistungs-Kathode, vorzugsweise aus Lanthan-Strontium-Cobalt-Ferrit (LSCF), nasschemisch aufgetragen werden.

Der gesamte Schichtenverbund wird während des Zellfertigungsprozesses vorteilhaft nicht mehr gesintert, wobei eine in *situ* Sinterung bei Temperaturen unterhalb von 1200 °C bei Inbetriebnahme der Zelle von Vorteil ist.

Spezieller Beschreibungsteil

Nachfolgend wird die Erfindung anhand eines konkreten Austührungsbeispiels, einer Tabelle sowie einiger Figuren näher erläutert. Dies sollte einen Fachmann auf diesem Gebiet aber auch in die Lage versetzen, gegebenenfalls entsprechend der Rahmenbedingungen des verwendeten Substrates, bzw. den Anforderungen des aufzubringenden Diinnschichtelektrolyten im Rahmen der erfindungsgemäßen Lehre gewisse Abwandlungen bezüglich der Materialien, der Schichtdicken oder der gewählten Korngrößen als mit zur Erfindung gehörig zu betrachten.

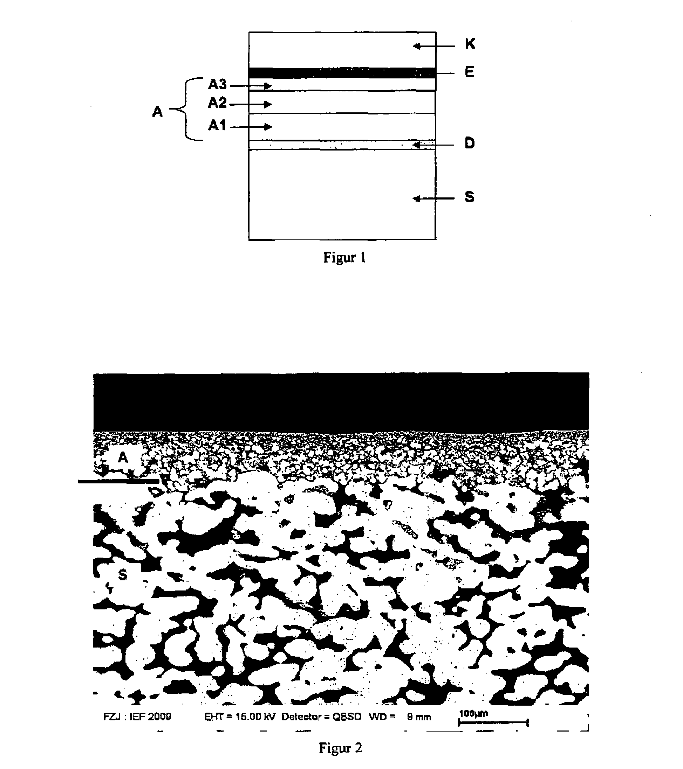

Die Figur 1 zeigt den schematischen Aufbau des erfindungsgemäßen Anodenschichtverbundes (A), umfassend wenigstens zwei Anodenschichten (A1, A2) sowie einer Anodeniunktionsschicht (A3), der über eine Diffusionsbarriere (D) auf einem metallischen Substrat (S) angeordnet ist. Auf diesen Attodenschichtverbund können im Anschluss vorteilhaft ein Dünnschichtelektrolyt (E) sowie eine Kathode (K) aufgebracht werden.

Die aufgeftihrten Nachteile aus dem Stand der Technik können durch einen Dücuaschichtelektrolyten überwunden werden, welcher insbesondere über physikalische Gasphasenabscheidung (PVD) oder Sol-Gel-Technologie hergestellt und auf eine geeignete Anode aufgebracht wird. Für einen besonders dünnen, gasdichten Elektrolyten (< 10 $\mu$m) ist dabei in der Regel eine Oberflächenrauhigkeit von weniger als 4 $\mu$m für $R_q$, von weniger als 1 $\mu$m für $R_q^\mu$ und von weniger als 2 $\mu$m für $R_z^\mu$ erforderlich bzw. von Vorteil.

Die Erfindung beschreibt dazu einen Anodenschichtverbund (A) für eine metallgestützte SOFC, auf dem vorteilhaft ein gasdichter Dünnschiehtelektrolyt (E) mit einer Dicke < 10 $\mu$m über PVD- bzw. Sol-Gel-Technologie aufgebracht werden kann.

Als Träger dient ein poröses metallisches Substrat (S) aus ITM, das eine Porosität von 30 bis 60 Vol.-% aufweist und von der Fa. Plansee hergestellt wurde.

Zur Unterbindung von metallischer Interdiffusion zwischen dem Metallsubstrat und der mctallischen Anode während der Sinterung und des späteren Zellbetriebes ist das Metallsubstrat (S) mit einer keramischen Diffusionsbarriere (D) aus LSM beschichtet. Denkbar sind auch Diffusionsbarrieren (D) aus LSCR oder CGO- Die Schichtdicke der Diffusionsbarriere beträgt in der Regel ca. 1 bis 3 $\mu$m.

Diffusionsbarrieren mit Schichtdicken von 0,1 bis zu 50 $\mu$m sind beispielsweise auch aus WO 2008/003113 bekannt.

Die Aufbringung eines gasdichten Dünnschichtelektrolyten stellt gewisse Anforderungen an die darunter liegende letzte Anodenschicht (letzte Schicht des Anodenschichtverbundes, Anodenfunktionsschicht) bezüglich der Rauhigkeit und der Porengröße, die durch einen mehrschichtigen, gradierten Schichtaufbau erfüllt werden können. Gleichzeitig muss dieser Anodenschichtaufbau zudem die notwendigen Anforderungen bezüglich Festigkeit, Leitfähigkeit, Haftbarkeit bei maximal 1200 °C Sintertemperatur und katalytischer Funktion erfüllen, und einen bezüglich der übrigen Brettnstoffzellenkomponenten angepassten thermischen Ausdehnungskoeffizienten aufweisen.

Ausgehend von einem mit einer Diffusionsbarriere (D) versehenen metallischen Substrat (S), das eine Oberflächenrauhigkeit $R_q$ zwischen 7 $\mu$m und 15 $\mu$m, eine Mikrorauhigkeit zwischen $R_q^\mu$ von 5 bis 12 $\mu$m und eine mittlere Porengröße zwischen 20 $\mu$m und 50 $\mu$m aufweist, wird über eine nasschemische Route (Siebdruck, Tauchbeschichtung, Schlickerguss) eine erste Anodenschicht (A1) aus Ni/8YSZ mit einer Schichtdicke von ca. 40 $\mu$m aufgebracht, um die Oberflächenrauhigkeit auf $R_q$-Werte zwischen 5 und 6 $\mu$m und die Mikrorauhigkeit $R_q^\mu$ auf 3 bis 4 $\mu$m zu reduzieren. Die erste Anodenschicht weist dazu insgesamt mittlere Porengrößen um 2 $\mu$m auf, was durch ein von 8YSZ-Partikeln aufgeßilltes Nickelgerüst realisiert wird, welches in der Nickelphase eine mittlere Porengröße von ca. 8 $\mu$m aufweist.

Um die Infiltration dieser ersten Anodenschicht (A1) in den metallischen Träger (S) zu verhindern und gleichzeitig eine hinreichende Versinterung der keramischen Komponente bei 1200 °C zu erreichen, wird eine bimodale Korngrößenverteilung von Ni-Pulver mit einer mittleren Korngröße um 5 $\mu$m, zum 8YSZ-Pulver mit einer mittleren Korngröße von ca. 0,6 $\mu$m und ein YSZ-Anteil von 35 Gew.-% Pulver gewählt. Die Korngröße und der Pulveranteil des 8YSZ-Pulvers müssen in diesem Bereich liegen, da es zudem noch die Aufgabe eines Sinterinhibitors dieser Anodenschicht erfüllen muss. Diese Bimodalität ist ebenfalls in der gesinterten ersten Anodenschicht ausgeprägt. In der Ni-Phase liegt die mittlere Sinterkomgröße vorzugsweise um 6,5 $\mu$m, und in der 8YSZ-Phase liegt die mittlere Sinterkomgröße vorzugsweise $\mu$m 0,7 $\mu$m.

Die zweite Anodenschicht (A2) wird ebenfalls über eine nasschemische Route aus Ni/8YSZ. auf die erste Anodenschicht- (A1) aufgebracht und muss die identischen Anforderungen der ersten Schicht wiederholen, nur dass dabei die Rauhigkeit und die Porengröße weiter reduziert werden müssen. Dies wird dadurch erreicht, dass die bimodale Korngrößenverteilung reduziert wird, jedoch nur so, dass keine oder nur eine geringe Infiltration in die erste Anodenschicht und keine Infiltration in das metallische Substrat erfolgt. Dies erreicht man, indem ein Ni-Pulver mit einer mittleren Korngröße von ca. 1,2 $\mu$m und einem Anteil von 65 Gew.-% einsetzt. Als Sinterinhibitor und Porenbildner wird ein 8YSZ-Pulver (35 Gew.-% Pulveranteil) mit einer mittleren Korngröße vorzugsweise um 0,6 $\mu$m verwendet. Die Schichtdicke dieser zweiten Anodenschicht wird auf 15 $\mu$m eingestellt, so dass daraus eine Rauhigkeit $R_q$ kleiner 5 $\mu$m, in diesem Fall von 2,3 $\mu$m, und eine Mikrorauhigkeit $R_q^\mu$ kleiner 2 $\mu$m, in diesem Fall um 1,0 $\mu$m resultieren. Die mittlere Porengröße dieser zweiten Anodenschicht liegt insgesamt 1,0 und 1,2 $\mu$m, wobei die mittlere Porengröße innerhalb der Nickelphase zwischen 4,0 und 4,5 $\mu$m liegt. Das Gefüge weist regelmäßig eine mittlere Sinterkorngröße um 3 $\mu$m für die Nickelphase und um 0,7 $\mu$m für die 8YSZ-Phase auf.

Auf diese zweite Anodenschicht (A2) wird nun ebenfalls nasschemisch (Siebdruck, TauchbeSchichtung, Schlikkerguss) eine aktive Anodeniunktionsschicht (A3) aus Ni0/8YSZ aufgebracht, die im Vergleich zu bisherigen bekannten Anodenfunktionsschichten aus anodengestützten SOFCs einen deutlich höheren NiO-Anteil von 80 Gew.-% aufweist, damit nach der Sinterung bei 1200 °C in reduzierender Atmosphäre eine ausreichende Schichtleitfähigkeit gegeben ist. Zur weiteren Reduzierung von Rauhigkeit und Porengröße werden ein NiO-Pulver mit einer mittleren Korngrößenverteilung von 0,3 $\mu$m und ein 8YSZ-Pulver mit einer mittleren Korngröße von ca. 0,2 $\mu$m eingesetzt. Die Schichtdicke der Anodenfunktionsschicht wurde zwischen 3 und 6 $\mu$m gewählt, um eine Rauhigkeit $R_q$ kleiner als 3 $\mu$m, in diesem Fall um 1,3 $\mu$m zu erreichen. Die Mikrorauhigkeit $R_q^\mu$ reduziert sich mit dieser Schicht auf Werte unterhalb 1 $\mu$m, in diesem Fall auf Werte um 0,37 $\mu$m. Dabei ergeben sich in der Regel gesamte mittlere Porengrößen von ca. 0,6 $\mu$m, was mit einer Porengröße in der Nickelphase von ca. 2,2 $\mu$m korreliert. Auch in der dritten Schicht besteht das Gefüge nach der Sinterung aus einer stark bimodalen Korngrößenverteilung: Die mittleren Sinterkorngrößen betragen ca. 1,5 $\mu$m für die Nickelphase und ca. 0,25 $\mu$m für die 8YSZ-Phase.

Diese erzeugte Anodenfunktionsschicht (A3) wird nun gemeinsam mit dem kompletten Anodenschichtverbund (A1, A2 und A3) bei Temperaturen unterhalb von 1300°C gesintert und kann anschließend zunächst mit einer Adaptionsschicht, bzw. direkt mit einem Dünnschichtelektrolyten (E) beschichtet werden, welcher über PVD- oder Sol-Gel-Technologie aufgebracht wird.

Anschließend kann eine Hochleistungs-Kathode, vorzugsweise aus Lanthan-Strontium-Cobalt-Ferrit (LSCF), nasschemisch aufgetragen und bei Inbetriebnahme der Zelle *in situ* gesintert werden.

Eine bildliche Darstellung des erfindungsgemäßen Anodenschichtverbundes bzw. einzelner Schichten dieses Verbundes sind in den Figuren 2, 3 und 4 zu erkennen.

Die Figur 2 zeigt einen groben Querschliff des entwickelten gradierten Aufbaus eines erfindungsgemäßen Anodenschichtverbundes auf einem porösen Metallsubstrat (S) ohne Elektrolyt. S bedeutet Substrat und A kennzeichnet den Anodenschichtverbund (A1, A2 und A3). Die Diffusionsbarriere ist in dieser Figur auf Grund der geringen Schichtdicke nicht zu erkennen. Deutlich ist die grob poröse Struktur des metallischen Substrats zuerkennen, auf dem nacheinander die einzelnen Schichten des Anodenschichtaufbaus aufgebracht wurden. In diesem Beispiel wurden auf dem ITM-Substrat die Anodenschichten A1 bis A3 nacheinander über Siebdruck aufgebracht, jeweils getrocknet und anschließend zusammen bei 1200 °C für 3h in einer Wasserstoflatmosphäre gesintert.

In allen Pasten wurde Terpineol als Lösemittel und Ethylcellulose als Bindemittel verwendet. Das Ni:8YSZ-Verhältnis betrug für die ersten beiden Anodenschichten 65:35 Gew.-%. Dabei kamen Nickelpulver der Fa. Vale Inco (Vale Inco Europe Limited, London, England) mit einer gemessenen Partikelgrößenverteilung von $d_{10}$ = 3,7 $\mu$m, $d_{50}$ = 13 $\mu$m, $d_{90}$ = 41 $\mu$m (Ni Type 123) für die erste Anodenschicht (A1) und $d_{10}$ = 0,8 $\mu$m, $d_{50}$ = 2,4 $\mu$m, $d_{90}$ = 5 $\mu$m (Ni Type 110) für die zweiten Anodenschicht (A2) zum Einsatz. Der Hersteller gibt für die beiden Pulver mittlere Korngrößen über die Fisher Sub-Sieve Sizer Methode von jeweils 3 - 7 $\mu$m (Type 123) und 0,8 - 1,5$\mu$m (Type 110) an. Weiterhin wurde für beide Schichten ein 8YSZ-Pulver der Fa. Unitec (FYT13-005H, Unitec Ceramics Ltd., Stafford, UK) eingesetzt, welches nach einem Mahl- und Dispergierschritt eine Partikelgröße von $d_{10}$ = 0,23 $\mu$m, $d_{50}$ = 0,56 $\mu$m, $d_{90}$ 1,2 $\mu$m aufwies. Für das nicht aufgearbeitete Pulver gibt der Hersteller eine Partikelgrö-βe von $d_{50}$=1,06 $\mu$m an. Der Gesamtfeststoffanteil in den Pasten betrug 69,3 Gew.-% (A1) und 59,0 Gew.-% (A2) und der Bindergehalt (Ethylcellulose 45cps, Sigma-Aldrich Chemie GmbH, Taufkirchen) 2,8 Gew.% (A1) und 2,4 Gew.-% (A2).

Die angegebenen Partikelgrößen wurden mittels statischer Lichtstreuung bestimmt (Fritsch analysette 22, Fritsch GmbH, Idar-Oberstein) und weichen teilweise von den über andere Methoden ermittelten Herstellerangaben ab. Dies liegt zum einen in der Messmethodik selbst begründet, die irregulär geformte Partikel anders bemisst, und zum anderen in der erreichbaren Dispergierbarkeit. Während bei der Fisher Sub-Sieve Sizer Methode recht große mechanische Kräfte auf die Partikel wirken, wurden die Partikel bei der Messung über statische Lichtstreuung in einer Ethanolsuspension mittels Ultraschall dispergiert, wodurch härtere Agglomerate nicht aufgeschlossen werden. Letzteres trifft in der Regel auch für den Herstellungsprozess insgesamt zu.

Die eigentliche Anodenfunktionsschicht (A3) bestand aus NiO der Fa. Baker (Mallinckrodt Baker, Inc., Phillipsburg, USA) mit einer Korngrößenverteilung in der vorgemahlenen und dispergierten Stufe von $d_{10}$ = 0,14 $\mu$m, $d_{50}$ = 0,29 $\mu$m, $d_{90}$ = 1,2 $\mu$m und 8YSZ der Fa. Tosoh (TZ-8Y, Tosoh Corp., Tokyo, Japan) mit $d_{10}$ = 0,12 $\mu$m, $d_{50}$ = 0,23 $\mu$m, $d_{90}$ = 0,36 $\mu$m im Verhältnis 80:20 Gew.-% mit einem Gesamtfeststoffanteil von 58,4 Gew.-% und einem Bindergehalt von 2,3 Gew.% (Ethylcellulose 10cps, Sigma-Aldrich GmbH). Für das NiO-Rohpulver gibt der Hersteller für die mittlere Korngröße eine Spezifikation von kleiner 3 $\mu$m an, die sich durch die Aufarbeitung entsprechend verringerte. Für das 8YSZ-Pulver gibt der Hersteller eine über Transmissionselektronenmikroskopie bestimmte mittlere Korngröße von 40 nm an. Die mittlere Korngröße gibt der Hersteller mit 0,58 $\mu$m an. Dieser Wert liegt deutlich über der angegebenen Korngröße, da die Einzelkörner im Ausgangspulver zu Sprühgranulaten agglomeriert wurden. Zudem treten harte Agglomerate auf, die während der gesamten Weiterverarbeitung nicht aufgebrochen werden können. In rasterelektronenmikroskopischen Aufnahmen wurde eine Korngröße von ca. 150 nm ermittelt. Bei den angegebenen Korngrößen ist demnach stets die Messmethode zu berücksichtigen.

Die Pulver wurden jeweils im Lösungsmittel vordispergiert, anschließend im entsprechenden Mischungsverhältnis in Mahlbehältern homogenisiert und anschließend mit einer Binderlösung zu einer Paste verarbeitet und auf einem Dreiwalzwerk (Exakt 50, Exakt Vertriebs GmbH, Norderstedt) homogenisiert. Für den Siebdruck wurden Siebe mit den Gewebeparametern 18 - 180 (für A1), 27 - 071 (für A2) und 47 - 045 (für A3) verwendet (erste Zahl: Fäden pro cm, zweite Zahl: Fadendicke in $\mu$m). Die Trocknung der einzelnen Schichten erfolgte bei 60°C. Die Sinterung aller drei Schichten erfolgte gemeinsam bei 1200°C über eine Zeitdauer von 3h in Wasserstoff, dabei wurde das NiO in der Anodenfunktionsschicht zu metallischem Nickel reduziert.

Zur Verdeutlichung der Struktur wurde zusätzlich eine Nahfeldaufnahme des Substrats und des Anodenschichtverbundes als Bruchfläche aufgenommen (Figur 3). Sowohl der gradierte Aufbau des Schichtverbunds (S, A1, A2, A3) als auch die bimodale Korngrößenverteilung innerhalb der Anodenschichten sind darin deutlich zu erkennen. Die feinere 8YSZ-Phase ist als helle spratzerformige Partikel zu erkennen, welche sich deutlich von den größeren, rundlich erscheinenden Ni-Körnern unterscheiden. Die poröse 8YSZ-Phase füllt die Zwischenräume der versinterten Ni-Körner nahezu vollständig aus.

In dcr Figur 4 wurde eine erste Anodcnschicht als Querschliff aufgenommen. Deutlich erkennbar die netzförmige Struktur der gesinterten Nickelpartikel (große, hellgraue Flächen) und die in den Zwischenräumen befindlichen 8YSZ-Partikel.

Die Tabelle fasst die gemessenen Werte für den Anodenschichtverbund zusammen. Dabei sind die Rauwerte für A1 und A2 im getrockneten Zustand bestimmt worden und die Rauwerte für A3 im gesinterten Endzustand. Weitere Messungen zeigen, dass die Rauwerte für sonst gleiche Proben im getrockneten und gesinterten Zustand übereinstimmen (Abweichungen kleiner als 10 % des Messwertes). Insbesondere für die letzten beiden Schichten, A2 und A3, sind die Unterschiede in der Mikrorauhigkeit ($\lambda_c$=150 $\mu$m) größer als in den anhand der DIN-Norm berechneten Rauhigkeiten.

Für Rauhigkeiten wurde der Lasertopograph CT200 (Cybcrtechnologies GmbH, Ingolstadt) mit einem konfokalen Lasersensor LT9010 verwendet (Messfleckgröße ca. 2 $\mu$m, vertikale Auflösung 10 nm). Die in 1 $\mu$m Schrittweise vermessenen Primärprofile wurden vor der Anwendung der DIN-Vorschriften mit einem Gaussfilter, $\alpha$=1n(2), Filterlänge 5 $\mu$m, gefiltert, um einzelne Fehlsignale aufgrund von Mehrfachreflexen zu minimieren.

Für die über das Linienverfahren ermittelten Korn- und Porengrößen des gesinterten Gefüge wurden für jede Kenngröße jeweils mindestens drei rasterelektronenmikroskopische Aufnahmen von Querschliffen der Schichten ausgewertet. Dabei wurden 500-1000 Linen pro Aufnahme eingezeichnet. Bei einer Pixelanzahl der rasterelektronischen Aufnahmen von 1024x768 Pixeln wurden für das Substrat ein Gesamtausschnitt der Breite 700 bis 1500 $\mu$m, für die erste Schicht des Anodenverbundes (A1) 65 bis 80 $\mu$m, für die zweite Schicht (A2) 30 bis 60 $\mu$m, und für die Anodenfunktionsschicht (A3) 5 $\mu$m (für die 8YS7-Korngröße) bis 30 $\mu$m (andere Kenngrößen), gewählt. Die inneren Korngrenzen wurden bei den Angaben zu den Korngrößen nicht berücksichtigt, sondern nur die äußere Morphologie. Die einzelnen Phasen wurden aufgrund der Unterschiede in der Kornform bzw. leichte Kontrastunterschiede aufgetrennt, welche durch EDX-Elementanalysen bestätigt wurden. Der Unterschied zwischcn den Sinterkorngrößen der Ni- und 8YSZ-Phase ist sehr deutlich ausgeprägt. Die Korngröße für das Ni ist in allen Schichten mindestens viermal so hoch wie die für das 8YSZ.

Beispiele für Parameter zu mittleren Korngrößen der dispergierten und tlw. aufgemahlenen

Ausgangspulver ermittelt über statische Lichtstreuung (in Klammern über andere Verfahren bestimmte Korngrößen der Hersteller) und Zusammensetzung der Schichten, der Rauwerte im getrockneten (A1, A2) bzw. gesinterten Zustand (A3), sowie der einzelnen Schichtdicken, Korn- und Porengrößen im gesinterten Zustand finden sich in der nachfolgenden Tabelle.

| | Substrat (S) | 1. Schicht (A1) | 2. Schicht (A2) | 3. Schicht (A3) |
|---|---|---|---|---|
| mittlere Korngröße Ni bzw. NiO [$\mu$m] | - | 12,5 (3-7) | 2,4 (0,8-1,5) | 0,29 (<3$\mu$m) |
| mittlere Korngröße 8YSZ [$\mu$m] | - | 0,6 (1,06) | 0,6 (1,06) | 0,23 (0,04) |
| Anteil 8YSZ [Gew.-%] | 0 | 35 | 35 | 20 |
| Schichtdicke [$\mu$m] | 950..1050 | 20 | 15 | 5 |
| Rauwerte $R_a$/$R_q$/$R_=$ [$\mu$m] | 9,1/12/72 | 4,2/5,5/32 | 1,8/2,3/12 | 1,1/1,3/5,7 |
| Mikrorauwerte $R^\mu_a$/$R^\mu_q$/$R^\mu_z$ [$\mu$m] | 7,0/8,7/34 | 2,7/3,3/12,6 | 0,91/1,0/3,4 | 0,37/0,45/1,7 |
| mittlere Sinterkomgröße Ni-Phase [$\mu$m] | 53 (gesamt) | 6,5 | 2,9 | 1,5 |
| mittlere Sinterkomgröße 8YSZ- Phase [$\mu$m] | - | 0,7 | 0,7 | 0,25 |
| mittlere Porcngröße Ni-Phase [$\mu$m] | - | 7,8 | 4,3 | 2,2 |
| mittlere Porengröße gesamt [$\mu$m] | 33 | 1,9 | 1,1 | 0,6 |
| max. Porengröße gesamt [$\mu$m] | 120 | 14 | 6,9 | 3,0 |

In der Anmeldung zitierte Literatur:

[1] P. Attryde, A. Baker, S. Baron, A. Blake, N. P. Brandon, D. Corcoran, D. Cumming, A. Duckett, K. El-Koury, D. Haigh, M, Harrington, C, Kidd, R. Leah, G. Lewis, C. Matthews, N. Maynard, T. McColm, A. Selcuk, M. Schmidt, R. Trezona, L. Verdugo, "Stacks and System based around metal supported SOFCs operating at 500 - 600 °C", Electrochemical Proceedings Volume 2005-07, Vol. 1, Seiten 113-122 [2005].

[2] G. Schiller; "Metallgestützte SOFC-Zellen" Fortbildungsseminar Werkstofffragen der Hochtemperatur-Brennstoffzelle, Deutsche Gesellschaft für Materialkunde (Hrsg.), Jülich, 26.-28.4.2006 (Vortrag und Manuskript).
[3] H.J. Cho and G.M. Choi: Fabrication and characterization of Ni-supported solid oxide fuel cell, Solid State Ionics 180 [11-13], 792-795 (2009).
[4] T.S. Smith: "Morphological Characterization of Porous Coatings." In: "Quantitative Characterization and Performance of Porous Implants for Hard Tissue Applications", ASTM STP953, J.E. Lemmons, Hrsg., American Society for Testing and Materials, Philadelphia, 1987, S. 92-102.
[5] M.I. Mendelson: "Average Grain Size in Polycrystalline Ceramics", J. Am. Ceram. Soc. 52 [8] (1969), 443-446.

**Patentansprüche**

1. Substratgestützte Anode für eine Hochtemperatur-Brennstoffzelle,
   **dadurch gekennzeichnet,**

   — **dass** auf einem metallischen Substrat (S) ein wenigstens 3-schichtiger Anodenschichtvcrbund (A1, A2, A3) angeordnet ist,
   — **dass** die einzelnen Schichten des Anodenschichtverbundes jeweils Yttriumoxid-stabilisiertes Zirkoniumdioxid (YSZ) und Nickel aufweisen,
   — **dass** die Schichten des Anodenschichtenverbundes mit zunehmendem Abstand vom Substrat eine abnehmende mittlere Korngröße des Nickel-haltigen Pulvers aufweisen, und
   — **dass** die letzte, für den Kontakt mit dem Elektrolyten vorgesehene Schicht des Anodenschichtverbundes eine mittlere Oberflächenrauhigkeit $R_q$ kleiner 4 μm aufweist.

2. Anode nach Anspruch 1, bei der die letzte Schicht des Anodenschichtverbundes eine mittlere Porengröße in der Nickelphase kleiner 4 μm oder eine gesamte mittlere Porengröße kleiner 1,5 μm aufweist.

3. Anode nach Anspruch 1 bis 2 mit einem metallischen Substrat aus einer Legierung auf Chrombasis mit einem Chromgehalt von mehr als 65 Gew.-% oder einer ferritischen FeCrMx Legierung mit einem Chromgehalt von 20 bis 30 Gew.% und mit Mx = wenigstens ein Element oder ein Oxid der Gruppe der Seltenerdenmetalle, Sc, Ti, Al, Mn, Mo oder Co.

4. Anode nach Anspruch 1 bis 3 mit einem metallischen Substrat, welches eine mittlere Porengröße zwischen 5 und 60 μm, insbesondere zwischen 20 und 50 μm aufweist.

5. Anode nach Anspruch 1 bis 4 mit einer zwischen dem metallischen Substrat und der ersten Schicht des Anodenschichtverbundes angeordneten Diffusionsbarriere.

6. Anode nach Anspruch 1 bis 5, bei der die erste Schicht des Anodenschichtverbundes eine mittlere Porengröße in der Nickelphase zwischen 4 und 15 μm oder eine gesamte mittlere Porengröße zwischen 1 und 8 μm aufweist.

7. Anode nach Anspruch 1 bis 6, bei der die zweite Schicht des Anodenschichtverbundes eine mittlere Porengröße in der Nickelphase zwischen 2 und 7 μm oder eine gesamte mittlere Porengröße zwischen 0,5 und 4 μm aufweist.

8. Verfahren zur Herstellung einer substratgestützten Anode für eine Hochtemperatur-Brennstoffzelle, **dadurch gekennzeichnet,**

   - **dass** auf ein metallisches Substrat ein wenigstens 3-schichtiger Anodenschichtverbund aufgebracht wird,
   - wobei die einzelnen Schichten des Anodenschichtverbundes jeweils Yttriumoxid-stabilisiertes Zirkoniumdioxid (YSZ) und Nickel aufweisen,
   - wobei die Ausgangspulver zumindest in der ersten und zweiten Schicht des Anodenschichtverbundes eine bimodale Korngrößenverteilung aufweisen,
   - wobei zumindest die mittlere Korngröße des eingesetzten Nickel-haltigen Pulvers von Schicht zu Schicht reduziert wird, so dass sich für die letzte Schicht des Anodenschichtverbundes eine Oberflächenrauhigkeit $R_q$ geringer als 4 μm ergibt.

9. Verfahren nach Anspruch 8, wobei die mittlere Korngröße des Nickel-haltigen Pulvers in der letzten Schicht des Anodenschichtverbunds maximal 0,5 μm beträgt,

**10.** Verfahren nach Anspruch 8 bis 9, bei dem das eingesetzte metallische Substrat eine mittlere Oberflächenrauhigkeit $R_q$ zwischen 7 $\mu$m und 15 $\mu$m aufweist.

**11.** Verfahren nach Anspruch 8 bis 10, bei dem vor dem Aufbringen des Anodenschichtverbundes auf dem metallischen Substrat eine Diffusionsbarriere aufgebracht wird.

**12.** Verfahren nach Anspruch 8 bis 11, bei dem für die erste Schicht des Anodenschichtverbundes ein 8YSZ-Pulver mit einer mittleren Korngröße zwischen 0,5 bis 1,5 $\mu$m und ein Nickel-haltiges Pulver mit einer mittleren Korngröße zwischen 3 bis 20 $\mu$m eingesetzt werden.

**13.** Verfahren nach Anspruch 8 bis 12, bei dem für die erste Schicht des Anodenschichtverbundes ein 8YSZ-Pulver mit einem Anteil von 20 bis 40 Gew.-% eingesetzt wird.

**14.** Verfahren nach Anspruch 8 bis 13, bei dem die erste Schicht des Anodcnschichtverbundes eine mittlere Oberflächenrauhigkeit $R_q$ zwischen 2 und 8 $\mu$m aufweist.

**15.** Verfahren nach Anspruch 8 bis 14, bei dem für die zweite Schicht des Anodenschichtverbundes ein 8YSZ-Pulver mit einer mittleren Korngröße zwischen 0,5 bis 1,5 $\mu$m und ein Nickel-haltiges Pulver mit einer mittleren Korngröße zwischen 0,7 bis 4 $\mu$m eingesetzt werden.

**16.** Verfahren nach Anspruch 8 bis 15, bei dem für die zweite Schicht des Anodenschichtverbundes ein 8YSZ-Pulver mit einem Anteil von 20 bis 40 Gew.-% eingesetzt wird.

**17.** Verfahren nach Anspruch 8 bis 16, bei dem für die letzte Schicht des Anodenschichtverbundes ein 8YSZ-Pulver mit einer mittleren Korngröße von ca. 0,1 bis 0,3 $\mu$m und ein Nickel-haltiges Pulver mit einer mittleren Korngröße von ca. 0,1 bis 0,5 $\mu$m eingesetzt werden.

**18.** Verfahren nach Anspruch 8 bis 17, bei dem für die letzte Schicht des Anodenschichtverbundes ein 8YSZ-Pulver mit einem Anteil von 5 bis 20 Gew.-% eingesetzt wird.

**19.** Verfahren nach Anspruch 8 bis 18, bei dem die zweite Schicht des Anodenschichtverbundes einen quadratischen Mittenrauwert $R_q$ kleiner 5 $\mu$m aufweist.

**20.** Verfahren nach Anspruch 8 bis 19, bei dem ein Dünnschichtelektrolyt (E) auf den Anodenschichtverbund (A1, A2, A3) aufgebracht wird, insbesondere über PVD- oder ein Sol-Gel-Verfahren aufgebracht wird.

**21.** Verfahren nach Anspruch 20, bei dem eine Kathode (K) auf den Dünnschichtelektrolyt aufgebracht und *in situ* gesintert wird.

Figur 1

FZJ : IEF 2009    EHT = 15.00 kV   Detector = QBSD   WD = 9 mm    100µm

Figur 2

A3
A2
A1
S

FZJ : IEF 2009    EHT = 15.00 kV  Detector = QBSD  WD =   8 mm    10µm

Figur 3

FZJ : IEF 2009    EHT = 15.00 kV  Detector = QBSD  WD =   9 mm    10µm

Fig. 4

**EP 2 333 883 A1**

| | Europäisches Patentamt | | |
|---|---|---|---|
| | European Patent Office | **EUROPÄISCHER RECHERCHENBERICHT** | **Nummer der Anmeldung** |
| | Office européen des brevets | | EP 09 40 0053 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 598 892 A1 (TOHO GAS KK [JP]; NIPPON CATALYTIC CHEM IND [JP]) 23. November 2005 (2005-11-23) * Absatz [0042] * * Absatz [0051]; Abbildung 1c * * Absatz [0067] - Absatz [0073] * * Absatz [0092] * * Absatz [0112] - Absatz [0115] * * Absatz [0133] - Absatz [0134] * * Absatz [0160] - Absatz [0166] * ----- | 1-19,21 | INV. H01M4/90 H01M4/86 H01M4/88 H01M8/12 |
| X | US 2005/089739 A1 (SECCOMBE DONALD A JR [US] ET AL SECCOMBE JR DONALD A [US] ET AL) 28. April 2005 (2005-04-28) * Absatz [0009] * * Absatz [0029] * * Absatz [0043] * * Abbildung 3 * ----- | 8,14, 19-21 | |
| A | US 6 428 920 B1 (BADDING MICHAEL E [US] ET AL) 6. August 2002 (2002-08-06) * Abbildung 2 * * Spalte 4, Zeile 24 - Zeile 27 * * Spalte 6, Zeile 7 - Zeile 9 * ----- | 1-21 | RECHERCHIERTE SACHGEBIETE (IPC) H01M |
| A | EP 1 768 208 A2 (KOREA INST SCIENCE TECHNOLOGY [KR]) 28. März 2007 (2007-03-28) * Abbildung 2 * * Absatz [0025] - Absatz [0037] * ----- | 1-21 | |
| A | US 2003/165726 A1 (ROBERT GILLES [CH] ET AL) 4. September 2003 (2003-09-04) * Zusammenfassung * ----- -/-- | 1-21 | |

Der vorliegende Recherchenbericht wurde für alle Patentansprüche erstellt

| Recherchenort | Abschlußdatum der Recherche | Prüfer |
|---|---|---|
| München | 25. Februar 2010 | Martín Fernández, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 09 40 0053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2006/082057 A2 (RISOE NAT LAB [DK]; LARSEN PETER HALVOR [DK]) 10. August 2006 (2006-08-10) * Zusammenfassung * ----- | 1-21 | |
| A | WO 2007/067242 A1 (SIEMENS POWER GENERATION INC [US]; HUANG KEQIN [US]; HARTER HAROLD D []) 14. Juni 2007 (2007-06-14) * Zusammenfassung * ----- | 1-21 | |
| A | US 2003/224232 A1 (BROWALL KENNETH WALTER [US] ET AL) 4. Dezember 2003 (2003-12-04) * Zusammenfassung * ----- | 1-21 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 25. Februar 2010 | Martín Fernández, A |

EPO FORM 1503 03.82 (P04C03)

EP 2 333 883 A1

**ANHANG ZUM EUROPÄISCHEN RECHERCHENBERICHT
ÜBER DIE EUROPÄISCHE PATENTANMELDUNG NR.**

EP 09 40 0053

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2010

| Im Recherchenbericht angeführtes Patentdokument | Datum der Veröffentlichung | Mitglied(er) der Patentfamilie | Datum der Veröffentlichung |
|---|---|---|---|
| EP 1598892 A1 | 23-11-2005 | AU 2004237860 A1<br>CN 1697229 A<br>JP 2005322547 A<br>US 2005255355 A1<br>US 2007148521 A1 | 01-12-2005<br>16-11-2005<br>17-11-2005<br>17-11-2005<br>28-06-2007 |
| US 2005089739 A1 | 28-04-2005 | KEINE | |
| US 6428920 B1 | 06-08-2002 | EP 1287577 A1<br>JP 2004507862 T<br>TW 575977 B<br>WO 0189018 A1 | 05-03-2003<br>11-03-2004<br>11-02-2004<br>22-11-2001 |
| EP 1768208 A2 | 28-03-2007 | US 2007015045 A1 | 18-01-2007 |
| US 2003165726 A1 | 04-09-2003 | CN 1442919 A<br>DK 1343215 T3<br>JP 2003263991 A | 17-09-2003<br>26-03-2007<br>19-09-2003 |
| WO 2006082057 A2 | 10-08-2006 | AU 2006210103 A1<br>CA 2596173 A1<br>EP 1844517 A2<br>JP 2008529226 T<br>US 2008118635 A1 | 10-08-2006<br>10-08-2006<br>17-10-2007<br>31-07-2008<br>22-05-2008 |
| WO 2007067242 A1 | 14-06-2007 | CA 2633147 A1<br>EP 1964195 A1<br>JP 2009518810 T<br>KR 20080074224 A<br>US 2007134543 A1 | 14-06-2007<br>03-09-2008<br>07-05-2009<br>12-08-2008<br>14-06-2007 |
| US 2003224232 A1 | 04-12-2003 | KEINE | |

Für nähere Einzelheiten zu diesem Anhang : siehe Amtsblatt des Europäischen Patentamts, Nr.12/82

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008003113 A

**In der Beschreibung aufgeführte Nicht-Patentliteratur**

- Stacks and System based around metal supported SOFCs operating at 500 - 600 °C. *Electrochemical Proceedings,* Juli 2005, vol. 1, 113-122
- ''Metallgestützte SOFC-Zellen'' Fortbildungsseminar Werkstofffragen der Hochtemperatur-Brennstoffzelle. **G. Schiller.** Deutsche Gesellschaft für Materialkunde. Vortrag und Manuskript, 26. April 2006
- **H.J. Cho ; G.M. Choi.** Fabrication and characterization of Ni-supported solid oxide fuel cell. *Solid State Ionics,* 2009, vol. 180 (11-13), 792-795
- ''Morphological Characterization of Porous Coatings.'' In: ''Quantitative Characterization and Performance of Porous Implants for Hard Tissue Applications''. **T.S. Smith.** ASTM STP953. American Society for Testing and Materials, 1987, 92-102
- **M.I. Mendelson.** Average Grain Size in Polycrystalline Ceramics. *J. Am. Ceram. Soc.,* 1969, vol. 52 (8), 443-446